# EUROPEAN PATENT APPLICATION

(11) **EP 0 575 002 A1**
(43) Date of publication of application: **22.12.1993**
(21) Application number: 93201708.0
(22) Date of filing: 14.06.1993
(51) Int. Cl.: C02F 3/02

(54) **A system for the aerobic purification of wastewater**

(30) Priority: 15.06.1992 NL 9201062
(71) Applicant: Coöperatieve Verkoop- en Productievereniging van Aardappelmeel en Derivaten 'AVEBE' B.A., NL-9641 JA Veendam (NL)
(72) Inventor: de Vries, Johannes, NL-9481 GE Vries (NL)
(74) Representative: Smulders, Theodorus A.H.J., Ir.

(57) **Abstract**

Described is a system for the aerobic purification of waste (5), in particular wastewater, in which the waste is treated in an aeration chamber (11) in which a substantially constant oxygen concentration is maintained.

This system is provided with a calculating unit (30) receiving a signal indicative of the amount of oxygen instantaneously consumed per unit of time, and producing an output signal indicative of the instantaneous pollution burden.

## Description

This invention relates to a system for the aerobic purification of waste, in particular wastewater, comprising: an aeration chamber for receiving waste to be purified; and a controlling means for measuring the oxygen concentration in the atmosphere in the aeration chamber, and for controlling a supply stream of oxygen in such a manner that the measured oxygen concentration remains substantially equal to a predetermined target value.

Because of environmental requirements wastewater producers are obliged to keep the extent of pollution of the wastewater below a certain maximum value. If necessary, the wastewater is to be purified before it is discharged into the surface water.

During the aerobic purification of complex organic waste the waste is exposed in the aeration chamber to a suspension of bacteria in an oxygen-containing atmosphere. During the purification the mass of bacteria absorbs oxygen from the atmosphere because of the waste to be purified, the amount of oxygen to be absorbed per unit of time being proportional to the amount of pollution of the waste to be purified. In order to achieve an optimum purification, the oxygen concentration in the atmosphere in the aeration chamber must have a predetermined value as constantly as possible. It is known to realize this by measuring the oxygen concentration in the aeration chamber, and supplying more oxygen when this concentration falls or less oxygen when this concentration rises.

In the purification systems now used in practice, a sample is regularly taken from the waste to be purified for the purpose of analysis. Since the results of analysis are often not available until after a relatively long period of time, in the order of 24 hours or more, the extent of pollution of the waste to be purified, hereinafter called "pollution burden", can be determined only afterwards.

Such a delay is undesirable.

In production processes, there is often a direct relation between the amount of product produced and the amount of waste released. When the ratio of the amount of waste to the amount of product deviates from this relation, this may be an indication that there is something wrong in the production process. In that case, it is of course desirable to know such deviations as soon as possible in order to be capable of restoring the production process as rapidly as possible.

Furthermore, it often occurs in practice that in a production process there are several processing units, each of which produces waste, thus contributing to the total stream of waste.

It is a fact that the purification system has a maximum purification capacity. When this capacity is exceeded, the degree of pollution of the purified waste will not meet the requirements imposed. Depending on the conditions imposed by the local authorities, it may then occur that the company in question is not allowed to discharge the purified waste and/or a fine may be imposed on the company in question. In order to avoid such a situation, it is known in practice that the company reacts to an imminent excess of the maximum purification capacity by stopping the production process. As a solution to the waste problem, this step is effective but has the disadvantageous result that no production takes place at all, which means a loss of production, and that after some time the production process must be started up again, which is usually a complicated procedure.

It is an object of this invention to provide a purification system supplying a continuous indication of the pollution burden.

To achieve this object, the invention provides a system having the features of claim 1 in combination.

For one thing, it is thus possible for a waste producer to continuously monitor the waste production from his production process and to rapidly react to deviations.

For another thing, it is thus possible to adequately react to an imminent excess of capacity by continuing the production process at a decreased rate. If desired, one or more production units may be stopped.

In general, it is even possible to identify a defective production unit, if any, by analysis of the variation of the pollution burden as a function of the time, after which this production unit is stopped and repaired without requiring the other production units to be stopped owing to an increasing pollution burden.

A system as defined in the preamble of claim 1 is known from German Offenlegungsschrift 2,631,825. Although in this known system the "instantaneous" pollution burden is measured semicontinuously, this measurement is carried out directly; upon introduction of the wastewater to be purified, a number of parameters thereof are measured and the pollution burden is calculated from the measured values of those parameters. This method, however, requires expensive equipment and, moreover, shows results unreliable in practice.

Also, in this known system the oxygen concentration is measured continuously; the measured value with a target value and on the basis of the outcome of that comparison the supply of fresh oxygen is controlled with the purpose of bringing the prevailing oxygen concentration more into line with the target value. Thus, the target value for the oxygen concentration is adjusted on the basis of the calculated pollution burden.

The present invention is based on the insight that the instantaneous oxygen consumption is proportional to the instantaneous pollution burden, so that it is possible to calculate the instantaneous pollution burden if the instantaneous oxygen consumption is known. The system based on this insight, proposed by the present invention, is therefore distinguished from the system known from the above publication by the characteristic features of claim 1.

Summarizing, the essential difference to be indicated between the present invention and the system known from the above publication is that in the known system the pollution burden is measured to affect the oxygen control cycle, whereas according to the invention the oxygen control cycle is utilized to calculate the pollution burden. The system according to the invention has the advantage that with relatively simple and inexpensive means a result is obtained which is even better than the result which, according to the prior art, is obtained with relatively expensive means.

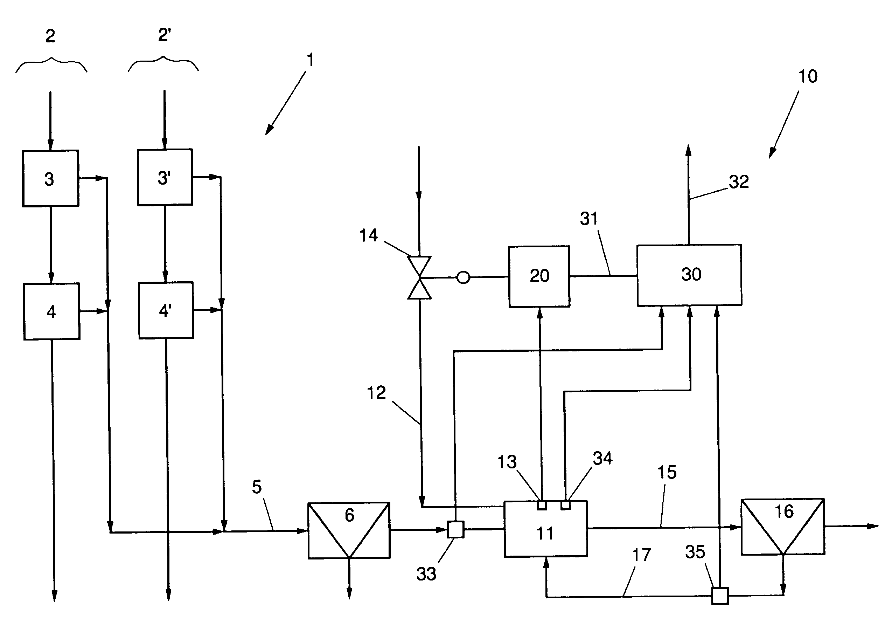

The above and other aspects, advantages and features of the invention will be explained in more detail by the following description of a preferred embodiment of the purification system according to the invention, with reference to the accompanying drawings. In these drawings, the single figure shows a waste purification system generally designated by numeral 10, which system is used by way of illustration to purify the waste from a production process generally designated by numeral 1, showing two production lines 2 and 2' side by side and showing for each production line 2, 2' two processing units 3, 4 and 3', 4', respectively.

Each of the processing units 3, 3', 4, 4' produces waste, designated by 5, which is supplied to an aeration chamber 11. If required, the waste 5 may first be subjected at 6 to a pretreatment, such as screening, filtering or settling.

Connected with the aeration chamber 11 is a supply line 12 for supplying oxygen from a reservoir, not shown, to the aeration chamber 11. Furthermore, the aeration chamber 11 is provided with an oxygen concentration detector 13 which is coupled with a controlling means 20. On the basis of the oxygen concentration in the aeration chamber 11 measured by the detector 13, the controlling means 20 controls the position of a control valve 14 disposed in the supply line 12, in such a manner that the oxygen concentration measured remains substantially equal to a predetermined target value.

The purified wastewater leaves the aeration chamber 11 via a line 15. Before it is discharged into the surface water, it may be subjected at 16 to a posttreatment, e.g. settling, in which the sediment formed may be returned to the aeration chamber 11 via a line 17.

According to the invention, there is provided a calculating unit 30 coupled with the controlling means 20. Via a signal path 31 the controlling means 20 provides the calculating unit 30 with a signal indicative of the amount of oxygen instantaneously consumed per unit of time. In the controlling means 10 this signal may be derived from the control signal for the control valve 14.

It is also possible that the calculating unit 30 may be directly provided with this control signal for the control valve 14, which calculating unit 30 may then convert this control signal into a signal indicative of the amount of oxygen instantaneously consumed per unit of time. Thus the controlling means 20 need not be adapted to provide the signal indicative of the amount of oxygen instantaneously consumed per unit of time, so that already existing controlling means may be utilized.

On the basis of the signal received from the controlling means 20, the calculating unit 30 provides at 32 an output signal indicative of the instantaneous pollution burden.

In a special embodiment the calculating unit 30 and the controlling means 20 are designed as a combined controlling/calculating unit. Thus the number of components is reduced and the connection 31 can be omitted.

The calculating unit 30 may be coupled with a detector 33 disposed in the supply line 5 for the aeration chamber 11 to measure the flow rate of the waste to be purified. If desired, the calculating unit 30 may provide an output signal indicative of the instantaneous pollution burden per kilogram or litre of waste produced.

In a further embodiment the calculating unit 30 may be coupled with one or more detectors 33 disposed in the aeration chamber 11 for measuring one or more relevant process parameters, such as the degree of acidity (pH) and/or the temperature (T) and/or the electric conductivity of the waste. Also, the calculating unit 30 may be coupled with a detector 35 disposed in the return line 17 for measuring the amount of solid matter returned.

Such process parameters are not essential for the calculation of the pollution burden as a function of the oxygen consumption. When, however, theses process parameters significantly deviate from a predetermined range of values allowed, the control signal of the controlling means 20 is no longer representative of the pollution burden.

The calculating unit 30 may produce its output signal 32 in the form of a signal directly readable for operating personnel, e.g. in the form of digital values on a display or in the form of the position of a pointer. Also, the calculating unit 30 may produce its output signal 32 in the form of a recordable electric signal. When this signal is actually recorded, e.g. in a memory (not shown) coupled with the calculating unit 30 or by means of an X-t-recorder, a conclusion regarding the condition of the production process can be drawn from the variation of this signal. In, whether or not automatic, response thereto, one or more waste producing units 3, 3', 4, 4' may be switched off. In this connection, switching off a production line 2, 2' or operating a production line 2, 2' at reduced power may also be considered.

By analyzing the form of the output signal 32, a defective waste producing unit can be identified. For instance, when the output signal 32 slowly increases at an otherwise constant production, an evaporator is likely to be out of order. When the output signal 32 very rapidly increases at an otherwise constant production, an ion exchanger is likely to be out of order. In direct response thereto, a repair may be carried out.

## Claims

1. A system for the aerobic purification of waste (5), comprising:
an aeration chamber (11) for receiving waste to be purified;
a controlling means (20) for measuring the oxygen concentration in the atmosphere in said aeration chamber (11), and for controlling a supply stream of oxygen (12) in such a manner that the measured oxygen concentration remains substantially equal to a predetermined target value;
and a calculating unit (30) coupled with said controlling means (20), said calculating unit (30) producing an output signal (32) indicative of the instantaneous pollution burden,
**characterized**
in that an input of said calculating unit (30) is coupled with an output of said controlling means (20);
that said controlling means (20) provides said calculating unit (30) with a signal (31) indicative of the amount of oxygen instantaneously consumed per unit of time; and
that said calculating unit (30) is designed to produce said output signal (32) indicative of the instantaneous pollution burden depending on said signal (31) indicative of the amount of oxygen instantaneously consumed per unit of time.

2. A system according to claim 1, **characterized** in that a control signal produced by said controlling means (20) for controlling the oxygen supply to said aeration chamber (11) is utilized as the signal (31) to be supplied to said calculating unit (30).

3. A system according to claim 1 or 2, **characterized** in that said calculating unit and said controlling means are designed as a combined controlling/calculating unit.

4. A system according to at least one of the preceding claims, **characterized** in that said calculating unit (30) is coupled with an input of said aeration chamber (11) to measure the flow rate of the waste to be purified.

5. A system according to at least one of the preceding claims, **characterized** in that said calculating unit (30) is coupled with said aeration chamber (11) to measure one or more process parameters.

6. A process for calculating the instantaneous pollution burden in an aeration chamber (11) of an aerobic waste purification system, in which system the oxygen concentration in the atmosphere is measured in said aeration chamber (11) and the oxygen supply is controlled to keep the oxygen concentration substantially constant;
**characterized** in that the instantaneous pollution burden is calculated on the basis of the control of the oxygen concentration.
